(19) **Europäisches Patentamt**

**European Patent Office**

**Office européen des brevets**

(11) Veröffentlichungsnummer: **0 407 725 A2**

(12) **EUROPÄISCHE PATENTANMELDUNG**

(21) Anmeldenummer: **90110429.9**

(22) Anmeldetag: **01.06.90**

(51) Int. Cl.⁵: **A01B 33/12**

(30) Priorität: **14.07.89 DE 3923223**

(43) Veröffentlichungstag der Anmeldung:
**16.01.91 Patentblatt 91/03**

(84) Benannte Vertragsstaaten:
**DE FR GB IT NL**

(71) Anmelder: **Amazonen-Werke H. Dreyer GmbH & Co. KG KG**
**Am Amazonenwerk 9-13**
**D-4507 Hasbergen-Gaste(DE)**

(72) Erfinder: **Gieseke, Reinhard**
**Eichenwall 4**
**D-2872 Hude 1(DE)**

(54) bodenbearbeitungsmaschine, insbesondere Kreiselegge.

(57) Bodenbearbeitungsmaschine, insbesondere Kreiselegge mit mehreren in einer Reihe zur Fahrtrichtung angeordneten, zwangsläufig angetriebenen Kreiseln, die mit Zinken versehen und an einen Querträger gelagert sind, welcher als Kastenträger zur Aufnahme der Stirnräder ausgebildet ist, an dessen Enden nahe neben den äußeren Kreiseln je ein Schild stehend angeordnet ist, wobei die beiden Schilde die Verlagerung der von den äußeren Kreiseln mitgenommenen Erde begrenzen, wobei die Schilde jeweils an einem Bügel befestigt sind, dessen quer zur Arbeitsrichtung der Maschine liegender Schenkel um eine Achse schwenkbar ist, die mit Abstand von Ende des Querträgers in Arbeitsrichtung verläuft. Um in vorteilhafter Weise die Anbringung des Seitenschildes weiterzubilden, ist vorgesehen, daß die Schwenkachse (26) des Bügels (23) sich unterhalb des die Stirnräder (16) aufnehmenden Querträgers (1) befindet.

FIG. 3

## BODENBEARBEITUNGSMASCHINE, INSBESONDERE KREISELEGGE

Die Erfindung betrifft eine Bodenbearbeitungsmaschine, insbesondere Kreiselegge gemäß des Oberbegriffes des Patentanspruches 1.

Eine derartige Kreiselegge ist beispielsweise durch die europäische Offenlegungsschrift 02 83 078 bekannt geworden. Bei dieser Bodenbearbeitungsmaschine sind am Ende jeder Kreiselreihe jeweils stehend angeordnete Seitenschilde vorgesehen, welche um eine Schwenkachse, die sich im Abstand vom Ende des Querträgers befindet, schwenken können. Desweiteren sind die Schilde gegenüber dem Bügel höhenverstellbar angeordnet. Wenn unzerdrückbare Gegenstände, wie beispielsweise Steine, zwischen Zinken und Seitenschild gelangen, kann das Seitenschild seitlich ausweichen. Des weiteren kann das Seitenschild aufgrund seiner Höhenbeweglichkeit sich Bodenunebenheiten automatisch anpassen. Aufgrund der Anlenkung des Seitenschildes oberhalb des Kastenbalkens führt das Seitenschild bei einer Höhenbewegung relativ große Seitenbewegungen aus. Beim Auflaufen auf Bodenhindernisse weicht das Seitenschild schon bei einem geringen Anheben relativ weit seitlich aus, so daß der Boden auf dem benachbarten und bearbeiteten Streifen abgelegt wird. Dieses ist insbesondere beim Einsatz der Kreiselegge in Verbindung mit einer dahinter angeordneten Drillmaschine vom Nachteil, da dieser Boden dann auf dem bereits eingesetzten Boden abgelegt wird. Ertragseinbußen sind unvermeidbar die Folge.

Der Erfindung liegt die Aufgabe zugrunde, in vorteilhafter Weise die Anbringung des Seitenschildes weiterzubilden.

Diese Aufgabe wird erfindungsgemäß dadurch gelöst, daß die Schwenkachse des Bügels sich unterhalb des die Stirnräder aufnehmenden Querträgers befindet. Infolge dieser Maßnahme ergibt sich eine äußerst vorteilhafte Anordnung der Schwenkachse. Des weiteren wird eine sehr kompakte und kurze Anbringung des Seitenschildes gewährleistet. Das Seitenschild wird in unmittelbarer Nähe des äußeren Werkzeugkreisels jeweils gehalten. In vorteilhafter Weise sind die Schilde an dem Bügel höhenverstellbar angeordnet, so daß jeweils für unterschiedliche Arbeitstiefen der Bodenbearbeitungswerkzeuge bzw. bei verschiedenen Höhenlagen des Querträgers zur Bodenbearbeitungsebene die Seitenschilde exakt immer die gleiche vorgegebene Arbeitsbreite begrenzen und einhalten. Um diese Arbeitsbreite sicher einzuhalten und damit die Schilde jeweils immer die gleiche Lage einnehmen, ist erfindungsgemäß vorgesehen, daß jeweils am Ende des Querträgers ein Anschlag angeordnet ist, der die Schwenkbewegung des Bügels bzw. des Schildes nach unten begrenzt. In vorteilhafter Weise ist vorgesehen, daß zwischen dem Bügel und dem Querträger eine Feder angeordnet ist, welche das Schild in Richtung des Bodens und gegen einen Anschlag drückt. Somit wirkt das Seitenschild praktisch als starres Schild und es weicht nur aus, wenn unzerdrückbare Gegenstände zwischen Zinken und Seitenschild geraten. Zur Befestigung des Bügels, der das Seitenschild trägt, ist unterhalb des Querträgers ein Lagerbock angeordnet.

Weitere Einzelheiten der Erfindung sind den übrigen Unteransprüchen, der Beispielsbeschreibung und den Zeichnungen zu entnehmen. Hierbei zeigen

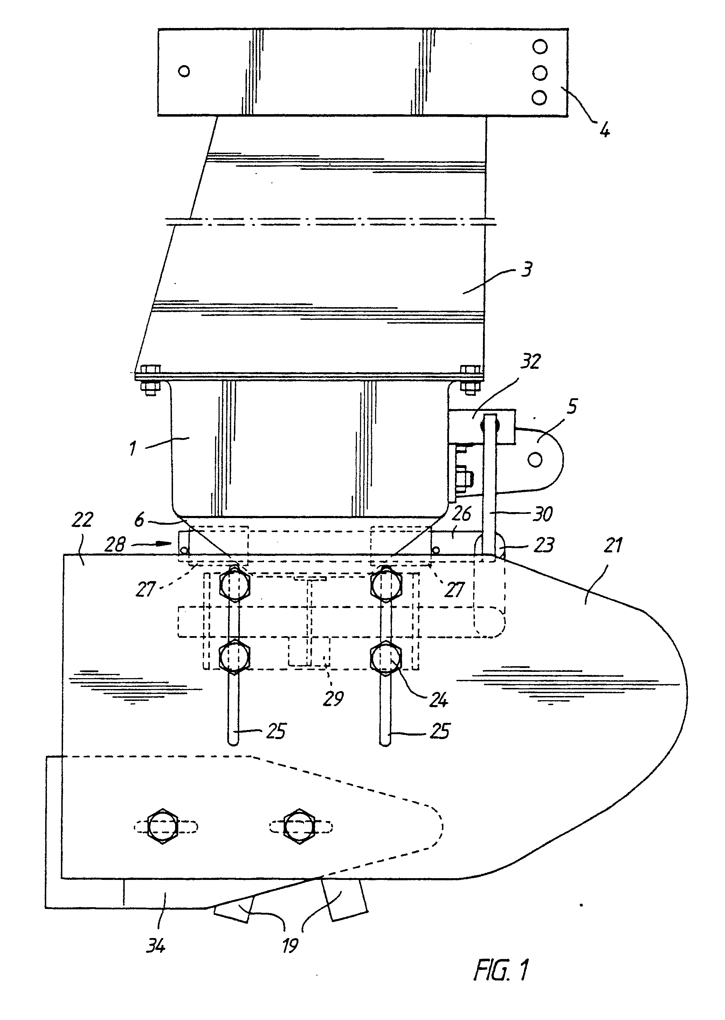

Fig. 1 eine erfindungsgemäß ausgebildete Kreiselegge in Seitenansicht,

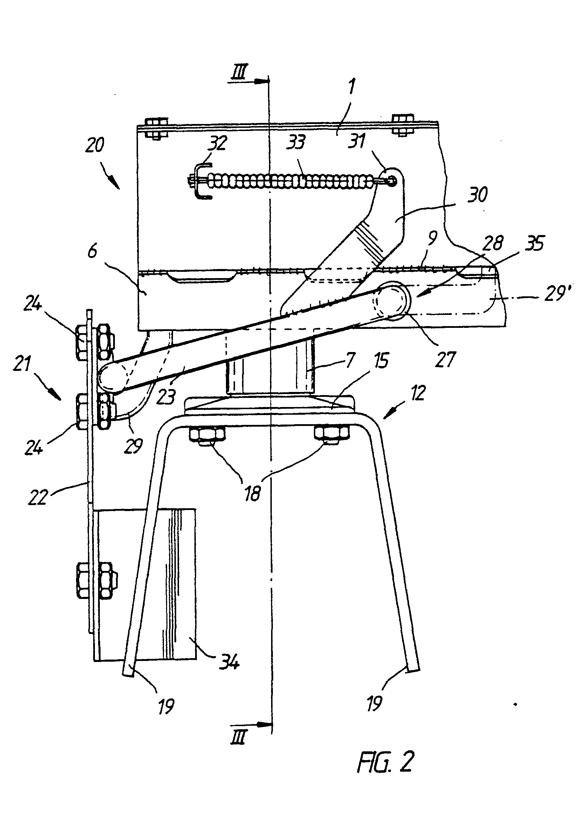

Fig. 2 der in Vorderansicht gesehen linke Teil der Kreiselegge mit der Anordnung der Seitenschilde und

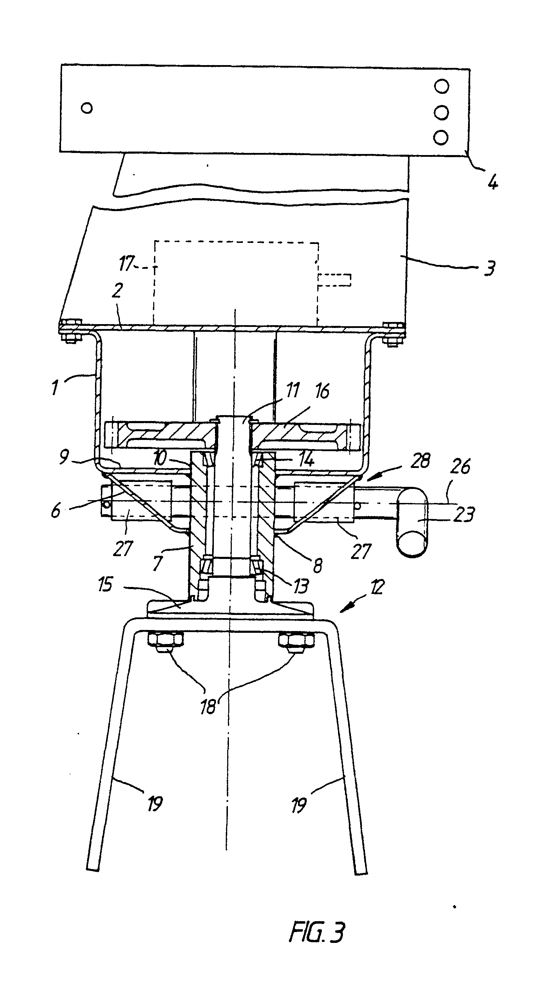

Fig. 3 die erfindungsgemäße Kreiselegge in der Ansicht III - III, wobei der Werkzeugkreisel um 90° gedreht ist.

Die als Kreiselegge ausgebildete Bodenbearbeitungsmaschine weist den Quertäger 1 auf. Der Querträger 1 ist als U-förmiges Hohlprofil ausgebildet und mit einem Deckel 2 auf seiner Oberseite verschlossen. In der Mitte ist auf dem Querträger der Anbauturm 3 mit den oberen Kupplungselementen 4 angeschraubt. Des weiteren befinden sich auf der Vorderseite des Querträgers 1 die beiden unteren Kupplungselemente 5. Über das obere Kupplungselement 4 und die beiden unteren Kupplungselemente 5 ist die Kreiselegge in bekannter Weise an den Dreipunktkraftheber eines Ackerschleppers anzubauen.

Unter dem Querträger 1 ist die U-förmige Schiene 6 angeschweißt, um den Querträger 1 auszusteifen. In dem Querträger 1 und der Schiene 6 sind in dem Kreiselabstand die Lagergehäuse 7 eingeschweißt. Hierzu weist die Schiene 6 die Bohrungen 8 und der Boden 9 des Querträgers 1 die Bohrungen 10 auf. Die Bohrungen 8 und 10 fluchten miteinander. In diese Bohrungen 8 sind die Lagergehäuse 7 eingesetzt. Die Lagergehäuse 7 sind in ihrem oberen Bereich an den Boden 9 des Querträgers 1 und in ihrem mittleren Bereich an die Schiene 6 angeschweißt. In dem Lagergehäuse 7 sind die Kreiselwellen 11 der Werkzeugkreisel 12 jeweils mittels der Lager 13 und 14 gelagert. Die Kreiselegge 11 ist an den Werkzeugträger 15 des Werkzeugkreisels 12 angeschmiedet. Auf dem oberen Ende der Kreiselwelle 11 ist das Stirnrad 16 drehfest angeordnet. Somit ist also der Querträger 1 zur Aufnahme der Stirnräder der einzelnen Werkzeugkreisel 12 vorgesehen. Über die Stirnräder 16, die miteinander kämmen, jedes Werkzeugkreisels 12 werden die Werkzeugkreisel gegeneinander im entgegengesetzten Drehsinn zueinander angetrieben. Über einen Zentralantrieb 17 werden von der Zapfwelle in bekannter und daher nicht dargestellter Weise die Werkzeugkreisel 12 angetrieben. Mittels der Schrauben 18 sind an dem Werkzeuträger 15 die Zinken 19 angeschraubt.

An jedem Ende 20 des Querträgers 1 befindet sich jeweils das Seitenschild 21 nahe den äußeren Kreiseln 12. Das Schild 22 des Seitenschildes 21 ist stehend angeordnet und begrenzt die Verlagerung der von den äußeren Kreiseln 12 mitgenommenen Erde. Die Seitenschilde 21 weisen das Schild 22 auf, welches an einem Bügel 23 mittel Schrauben 24 höhenverstellbar befestigt ist. Hierzu weist das Schild 22 die Langlöcher 25 auf, welche von den Schrauben 24 durchsetzt sind. Der Bügel 23 weist einen in Fahrtrichtung verlaufenden Schwenkbügel 26 auf. Dieser Schwenkbügel 26 ist in der Schiene 6 unterhalb des die Stirnräder 16 aufnehmenden Querträgers 1 gelagert, so daß die Schwenkachse unterhalb des Querträgers 1 befindet. Hierzu sind in der Schiene 1 die Lagerhülsen 27 eingeschweißt. Somit befindet sich also das Schwenklager 28, welches von der Hülsen 27 und den Schwenkbügel 26 gebildet wird, in der unter dem Querträger 1 angeordneten Schiene 6.

Des weiteren ist jeweils am Ende der Schiene 6 der Anschlag 29 angeordnet, der die Bewegung des Schildes 22 in Richtung des äußeren Werkzeugkreisels 12 begrenzt. Dieser Anschlag 29 bestimmt auch die Arbeitslage des Seitenschildes 22. An dem Bügel 23 ist der Hebel 30 angeschweißt. Zwischen dem oberen Ende 21 und der an dem Querträger 1 angeschweißten Halterung 32 ist die Zugfeder 33 angeordnet, welche das Schild 22 in Richtung des Boden und gegen den Anschlag 29 drückt. Somit wirkt das Schild 22 als starr angeordnetes Seitenschild 21. Das Seitenschild 21 weicht nur aus, wenn zwischen dem Zinken 19 und dem Schild 22 ein unzerdrückbarer Gegenstand, beispielsweise ein Stein gerät.

Am hinteren Ende des Schildes 22 ist das Leitblech 34 mittels der Schraube 33 angeschraubt. Dieses Leitblech 34 ist am hinteren Ende in Richtung des Werkzeugkreisels 12 schräg zur Mitte hin abgebogen, um so die von den Zinken 19 des Werkzeugkreisels 12 in Richtung des Schildes 22 verlagerte Erde nach innen zu führen, so daß eine Dammbildung vermieden wird. Hinter der Kreiselegge kann in bekannter und daher nicht dagestellter Weise noch eine Nachlaufwalze zur Einstellung der Arbeitstiefe der Zinken 18, sowie zum Andrükken des Bodens am Querträger 1 angeordnet sein.

An Stelle des Anschlag 29 am Ende der Schiene 6, ist es auch möglich, unmittelbaran dem Bügel 23 den Anschlag 29' anzubringen, der dann in eine Aussparung 35, die sich in der Schiene 6 befindet, gegen den Boden 9 des Querträgers 1 sich an legt und so die Schwenkbewegung des Bügels 23 und des Schildes 22 nach unten begrenzt. Gleichzeitig dient der Anschlag 29' als Durchschubbegrenzung des Schwenkbügels 26 durch das Schwenklager 28.

## Ansprüche

1. Bodenbearbeitungsmaschine, insbesondere Kreiselegge mit mehreren in einer Reihe zur Fahrtrichtung angeordneten, zwangsläufig angetriebenen Kreiseln, die mit Zinken versehen und an einen Querträger gelagert sind, welcher als Kastenträger zur Aufnahme der Stirnräder ausgebildet ist, an dessen Enden nahe neben den äußeren Kreiseln je ein Schild stehend angeordnet ist, wobei die beiden Schilde die Verlagerung der von den äußeren Kreiseln mitgenommenen Erde begrenzen, wobei die Schilde jeweils an einem Bügel befestigt sind, dessen quer zur Arbeitsrichtung der Maschine liegender Schenkel um eine Achse schwenkbar ist, die mit Abstand von Ende des Querträgers in Arbeitsrichtung verläuft, dadurch gekennzeichnet, daß die Schwenkachse (26) des Bügels (23) sich unterhalb des die Stirnräder (16) aufnehmenden Querträgers (1) befindet.

2. Bodenbearbeitungsmaschine nach Anspruch 1, dadurch gekennzeichnet, daß die Schilde (22) an dem Bügel (23) hohenverstellbar angeordnet sind.

3. Bodenbearbeitungsmaschine nach Anspruch 1, dadurch gekennzeichnet, daß jeweils am Querträgers (1) ein Anschlag (29, 29') angeordnet ist, der die Schwenkbewegung des Bügels (23) bzw. des Schildes (22) nach unten begrenzt.

4. Bodenbearbeitungsmaschine nach Anspruch 1, dadurch gekennzeichnet, daß unterhalb des Querträgers (1) ein Lagerbock (28) angeordnet ist, in dem der Bügel (23) gelagert ist.

5. Bodenbearbeitungsmaschine nach einem oder mehreren der vorstehenden Ansprüche, dadurch gekennzeichnet, daß unterhalb des Querträgers (1) ein über die gesamte Arbeitsbreite der Bodenbearbeitungsmaschine verlaufende U-förmige Schiene (6) angeordnet ist, die den Querträger (1) zusätzlich aussteift, daß in dieser U-förmigen Aussteifungsschiene (6) das Schwenklager (28) für die Aufnahme des Bügels (23) angeordnet ist.

6. Bodenbearbeitungsmaschine nach einem oder mehreren der vorstehenden Ansprüche, dadurch gekennzeichnet, das zwischen dem Bügel (23) und dem Querträger (1) eine Feder (33) angeordnet ist, welche das Schild (22) in Richtung des Bodens und gegen einen Anschlag (29, 29') drückt.

7. Bodenbearbeitungsmaschine nach einem oder mehreren der vorstehenden Ansprüche, dadurch gekennzeichnet, daß an dem Bügel (22) ein Hebel (30) angeordnet ist, an dem eine Zugfeder (33) angreift.

8. Bodenbearbeitungsmaschine nach einem oder mehreren der vorstehenden Ansprüche, dadurch gekennzeichnet, daß die Schiene (6) an dem Querträger (1) angeschweißt ist.

9. Bodenbearbeitungsmaschine nach einem oder mehreren der vorstehenden Ansprüche, dadurch gekennzeichnet, daß in dem Boden (9) des Querträgers (1) und in die Schiene (6) die Lagergehäuse (7) für die Kreisel (12) angeschweißt sind.

10. Bodenbearbeitungsmaschine nach einem oder mehreren der vorstehenden Ansprüche, dadurch gekennzeichnet, daß die Lagergehäuse (7) in ihrem oberen Bereich an dem Querträger (1) und in ihrem mittleren Bereich an die Schiene (6) angeschweißt sind.

FIG. 1

FIG. 2

FIG. 3